# EUROPEAN PATENT APPLICATION

(11) **EP 3 677 342 A1**
(43) Date of publication of application: **08.07.2020**
(21) Application number: 19211609.3
(22) Date of filing: 18.04.2016
(51) Int. Cl.: B05B 7/04, B05B 7/06, B01F 5/04

(54) **APPARATUS FOR NANOPARTICLE GENERATION**

(30) Priority: 16.04.2015 US 201562148597 P
(62) Divisional of application: 16781012.6
(71) Applicant: Nanovapor Inc., The Woodlands, Texas 77380 (US)
(72) Inventor: UNRAU, Chad James, The Woodlands, TX Texas 77389 (US); RICE, James Leonard, Malvem, AR Arkansas 72104 (US)
(74) Representative: J A Kemp LLP

(57) **Abstract**

An apparatus for creating solid or liquid nanoparticles having a nozzle (26) to create a first particle size from a bulk liquid flow that is in fluid communication with a gas flow amplifier comprising an inlet cone (24) connected to and in fluid communication with the inlet of a cylindrical housing (20); a diffuser (10) connected to and in fluid communication with the outlet of said housing; and said housing comprising at least two rings of ports (1, 2) disposed of along a circumference of the cylindrical housing (10); and a means to inject compressed gas into the housing through said ports (1, 2).

## Description

### FIELD OF INVENTION

The present invention generally relates to the field of nanoparticle generation, and more particularly to multi-stage nozzles and Venturi tubes with modified designs for nanoparticle aerosol generation and distribution.

### BACKGROUND OF THE INVENTION

Nanoparticles are useful in many applications such as coatings, environmental remediation, and the like due to their small size. However, nanoparticles are difficult to create from a bulk liquid. Indeed, nanoparticles cannot be created from standard atomization nozzles or from many single or multi-stage atomization nozzles. Under current methods of generation, specialized machinery and high energy applications are necessary for nanoparticle generation from bulk liquids resulting in expensive, complex processes. Moreover, even when created, nanoparticles, particularly liquid particles, often rapidly collide and coalesce leading to larger particle sizes and loss of the desired nanoparticle size. Standard single-stage and multi-stage atomization nozzles such as described in U.S. Patent No. 7,036,753 fail to provide for a low cost method to create nanoparticles from a bulk liquid while maintaining the nanoparticle size.

In certain applications such as environmental remediation, nanoparticle aerosols must not only be created and maintained but also distributed efficiently with a ventilation flow. A Venturi tube or gas flow amplifier, also known as simply a "Venturi," is a device that can be used to generate a ventilation flow by increasing the velocity of a substance passing through it. In simplest terms, a Venturi is a tube or pipe with a narrowed section, or throat, which reduces static pressure and increases the velocity of the substance passing through the venturi. When the substance exits the narrowed section, the static pressure increases and the velocity decreases accordingly. The simultaneous pressure reduction and velocity increase at the narrowed section of the Venturi tube is known as the Venturi effect, and has a large number of uses in varied fields.

U.S. Patent Nos. 3,406,953; 4,411,846; 4,792,284; 5,279,646; 6,418,957; 6,491,479; 7,367,361; 7,673,659; and 8,905,079 disclose various uses, advantages, and features of Venturi tubes. However, these patents fail to provide for a low cost method to create an adequate ventilation flow at high backpressures to distribute nanoparticles created from a bulk liquid while maintaining the nanoparticle size.

Therefore, there exists a need in the art for alternatives to expensive apparatuses and methods to generate nanoparticle aerosols, and in particular a low-cost apparatus to generate, maintain, and distribute a nanoparticle aerosol in a remote location that is lightweight, fabricated from low-cost materials, and easily used.

### BRIEF SUMMARY OF THE INVENTION

The embodiments of the invention described herein provide for an apparatus capable of nanoparticle aerosol generation and distribution through a low-cost device and more generally, a Venturi apparatus capable of generating high ventilation flows at high backpressures.

In a first embodiment, the device comprises a modified venturi tube having conical inlet and exits in which a plurality of ports are connected to a narrower throat portion. A connection is defined for compressed gas supply to these ports which inject compressed gas into the throat to induce flow through the tube via the Venturi effect. In a preferred embodiment, the ports connected to the throat are arranged in a ring around the circumference of the throat. In a more preferred embodiment, the ports form two, three, four, or more rings of gas injection ports along the longitudinal axis of the throat. In preferred embodiments, the apparatus of the present invention has conical inlet and exit portions having the shape of a Venturi tube.

In further preferred methods, an apparatus is defined for liquid or solid nanoparticle aerosol generation and distribution. The apparatus is particularly defined as a multistage nozzle with three or more stages. A first stage is primarily related to atomization by contacting high velocity compressed air with the liquid in a traditional bi-fluid nozzle arrangement resulting in micron-sized droplets. A second stage utilizes the micron-sized droplets from the first stage and further utilizes compressed air expressed from a ring of jets to provide a ring of high velocity jets that surrounds the droplets created in the first stage. Finally, the third stage occurs in the extended throat and adds a second ring of compressed air jets.

A further embodiment is directed to a nanoparticle generation apparatus comprising: a nozzle, to create a first particle size from a bulk liquid flow, that is in fluid communication with a gas flow amplifier where a means is provided for fluid communication with ambient gas between the nozzle and the gas flow amplifier; the gas flow amplifier comprising: an inlet cone connected to and in fluid communication with the inlet of a cylindrical housing; a diffuser connected to and in fluid communication with the outlet of said housing; and said housing comprising at least two rings of ports disposed of along a circumference of the cylindrical housing; and a means to inject compressed gas into the housing through said ports.

A further embodiment is directed to a gas flow amplifier comprising: an inlet cone connected to and in fluid communication with the inlet of a cylindrical housing; a diffuser connected to and in fluid communication with the outlet of said housing; wherein said housing comprising at least two rings of ports to inject compressed gas into the housing in such a way as to induce flow into the inlet of the housing; and a means for connecting a compressed gas supply to the housing.

A further embodiment is directed to a nanoparticle generation system comprising: a first nozzle, suitable for generating atomized particles of a bulk liquid; a gas flow amplifier, comprising a cylindrical housing having disposed on one end a conical inlet and on the other end a conical diffuser; and disposed of within said cylindrical housing is at least two rings of ports arranged in circular fashion along the circumference of the cylindrical housing and wherein the at least two rings of ports are separated by a distance of at least 0.5D, and wherein the at least two rings of ports are connected to a pressurized plenum, sufficient for expelling pressurized gas into the cylindrical housing; and wherein the first nozzle is in fluid communication with the inlet of the cylindrical housing and wherein a liquid is suitably ejected from the first nozzle and into the cylindrical housing in such a way as to atomize, mix, dilute, and evaporate the liquid so as to create and maintain a solid or liquid nanoparticle aerosol.

A further embodiment comprises a method of nanoparticle generation comprising introducing a bulk liquid into a device of any of the embodiments described above; wherein the bulk liquid is mixed with gas under pressure from the nozzle, mixed with ambient air, and then mixed with gas under pressure from two rings of ports within an elongated throat so as to generate nanoparticles that are expelled out of the diffuser at the end of the cylindrical housing.

A further embodiment comprises a method for creating atomized nanoparticles comprising: introducing a bulk liquid into a first nozzle, suitable for generating atomized particles of said bulk liquid; spraying the bulk liquid through said nozzle and into a gas flow amplifier, comprising a cylindrical housing having disposed on one end a conical inlet and on the other end a conical diffuser; and disposed of within said cylindrical housing is at least two rings of ports arranged in circular fashion along the circumference of the cylindrical housing and wherein the at least two rings of ports are separated by a distance of at least 0.5D, and wherein the at least two rings of ports are connected to a pressurized plenum, sufficient for expelling pressurized gas into the cylindrical housing; introducing a compressed gas to the at least two rings of ports wherein the bulk liquid is introduced into the cylindrical housing in such a way as to atomize, mix, dilute, and evaporate the liquid so as to create and maintain a solid or liquid nanoparticle aerosol.

### BRIEF DESCRIPTION OF THE DRAWINGS/FIGURES

FIG. 1 is a side cross-sectional view schematic drawing showing portions of an apparatus of a first embodiment of a multistage nanoparticle generation nozzle.
FIG. 2 is a side cross-sectional view schematic drawing showing portions of an apparatus of a second embodiment of a Venturi apparatus having two rings for incorporation of gasses into the throat of the apparatus.
FIG. 3 is a side cross-sectional view schematic drawing showing the ability to utilize an atomization nozzle with a second independent venturi apparatus together in series.
FIG. 4 depicts an embodiment of an atomization system depicting the flow through a nanoparticle generating nozzle.
FIG. 5 charts the results of a comparison between a single stage Venturi and an apparatus of the embodiments described herein, having two rings of compressed air jets.
FIG. 6 shows improved performance of air flow and nanoparticle formation at higher pressures when the ring to diffuser distance is increased to 2D from 0.5D.
FIG. 7 shows an increase to 4D between stages two and three results in modification of the performance of the apparatus.

### DETAILED DESCRIPTION OF THE PREFERRED EMBODIMENTS

The embodiments of the invention and the various features and advantages thereto are more fully explained with reference to the non-limiting embodiments and examples that are described and set forth in the following descriptions of those examples. Descriptions of well-known components and techniques may be omitted to avoid obscuring the invention and the various embodiments of the invention. The examples used herein are intended merely to facilitate an understanding of ways in which the invention may be practiced and to further enable those skilled in the art to practice the invention. Accordingly, the examples and embodiments set forth herein should not be construed as limiting the scope of the invention, which is defined by the various embodiments described throughout and by the appended claims.

As used herein, terms such as "a," "an," and "the" include singular and plural referents unless the context clearly demands otherwise.

Heretofore, nanoparticle generation of liquids and solids required expensive machinery, bulky machines, high energy input, and the like. However, the generation of nanoparticles is understood to serve an important mechanism in coatings, environmental remediation and various other applications.

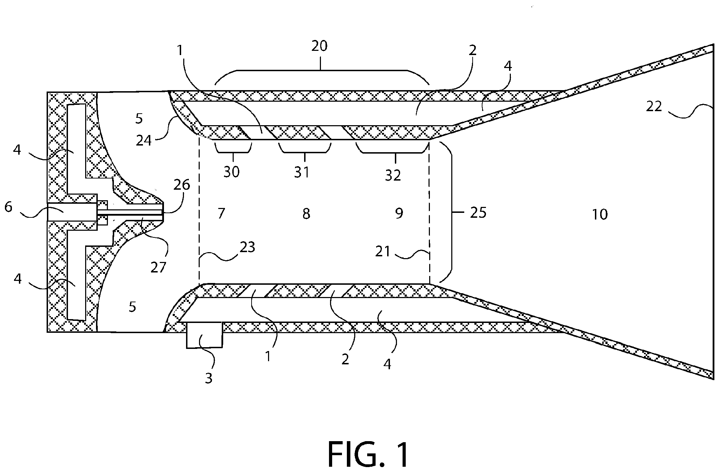

The apparatus depicted in FIG. 1 provides a new approach towards nanoparticle generation from bulk liquids, and can be advantageously fabricated from low-cost, "off-the-shelf' materials that provide a facile means for creating liquid or solid nanoparticle aerosols.

In the broad sense, the apparatus is defined as a multistage nozzle with three or more stages. A first stage is primarily related to atomization by contacting high velocity compressed air with a liquid in a traditional bi-fluid nozzle arrangement resulting in micron-sized droplets. In other embodiments, the first stage is defined as any nozzle capable of producing micron-sized droplets such as traditional electrostatic or ultrasonic nozzles. The liquid fed into the first stage may be any suitable liquid for atomizing into micron-sized droplets such as liquids with a surface tension from 15 dynes/cm to 80 dynes/cm. The liquid may also be a solution so as to contain a solvent and solute where the solvent is suitable for evaporation and the solute has the properties desired in the nanoparticle. A second stage utilizes the micron-sized droplets from the first stage and further utilizes compressed air expressed from a ring of jets to provide a ring of high velocity jets that surrounds the droplets created in the first stage. Finally, the third stage extends the length of throat of the second stage and adds a second ring of compressed air jets. These jets are further arranged to create a venturi effect and thereby drawing in ambient gas in between the first and second stages.

The second stage provides three effects on the droplets created in the first stage to drive nanoparticle formation. First, the high velocity air jets in the second stage provide for further atomization of the liquid coming from the first stage. Second, the creation of the Venturi effect by the air jets in the second stage creates a low pressure region that enhances evaporation of the liquid droplets created by the first and second stages. Third, the Venturi effect in the second stage creates a highly turbulent flow in the throat of the second stage by drawing in ambient air. This flow further enhances evaporation of the created droplets and rapidly dilutes the number concentration of the droplets to maintain their small size.

The third stage extends the length of throat of the second stage and adds a second ring of compressed air jets. The rings of jets in the second and third stages are separated by a distance greater than or equal to 0.1D, more preferably 0.2D to 10D, even more preferably 0.5D to 4D where D is the throat diameter. The third stage ring of jets extends the low pressure region of stage two and further increases the flow rate and turbulence through the Venturi throat resulting in further evaporation and number concentration dilution of the droplets resulting in solid or liquid nanoparticles depending on the solute and/or solvent used for the bulk liquid feed.

The third stage also includes an additional length of the throat before the diffuser greater than or equal to 0.1D, more preferably 0.2D to 10D, even more preferably 0.5D to 4D where D is the throat diameter. The diffuser is connected to the end of the extended throat created by stages two and three. The apparatus is powered by compressed gas, preferably ambient air, however other compressed gasses are suitable in certain embodiments. Additional stages may be further added between the first, second, or third stages with the addition of another ring of jets or air intake.

In greater detail, FIG. 1 particularly depicts a cross-sectional view of a multi-stage nanoparticle apparatus comprising a combination nozzle and gas flow amplifier. The cross-sectional view depicts the nozzle's internal features. However it is understood that the nozzle has a generally cylindrical shaped throat 20, and that the diffuser 22 is somewhat conical in shape, wherein the narrowest portion of the cone is equivalent in diameter to the diameter of the throat 25. The size and shape of the cones and cylindrical throat may maintain their general shape, but also wherein the throat has an elliptical shape in the transverse axis. Further the transverse axis and shape of the throat opening may have squared or angled edges, not rounded, without deviating from the principles of the venturi. Indeed, the diffuser and the input cone may maintain their generally conical shape but have angled corners in certain embodiments.

Beginning on the left side of FIG. 1, is depicted the liquid inlet 6. The liquid inlet 6 provides an opening for a liquid to enter the nozzle. Any known suitable attachment means may connect a liquid feed to the liquid intake 6. The liquid flows into the liquid passage 27 and the liquid is ultimately released from the liquid vent 26 where the liquid is admixed with the compressed gas from the compressed gas plenum 4 and primary atomization 7 occurs at this point.

The purpose of the liquid vent 26 is to introduce an atomized substance to the inlet of the cylindrical housing or throat 20, where it is accelerated via the compressed air that enters the apparatus through the throat portion. The distance of the liquid vent 26 to the start of the throat 23 can be any suitable distance such that the liquid expressed from the liquid vent 26 is drawn into the throat 20. This distance may be, for example, up to 0.5D/TAN(THETA/2) where D is the throat diameter 25 and THETA is the spreading angle of the atomized liquid jet generated from liquid vent 26. The liquid vent 26 is preferably a nozzle, for example, a bi-fluid nozzle or another design suitable to provide primary atomization of the fluid into the throat of the apparatus such as an electrostatic, pressure spray, or ultrasonic nozzle. The nozzle can be, for example, siphon, gravity, or pressure fed with a liquid suitable for spraying through the designed apparatus. As the liquid is released from the vent, the liquid is contacted by the compressed gas from the compressed gas plenum 4 and is expelled through the inlet cone 24 of the nozzle and into the throat 20. As this mixture is introduced into the throat, simultaneously, ambient air is being pulled into the nozzle through the ambient air inlet 5 due to the pressure gradient being created by the Venturi effect in the throat 20.

Adjacent to the ambient air inlet is a compressed gas inlet 3, which is connected to the compressed gas plenum 4. As is identified, the compressed gas plenum 4 extends to the 1^{st} stage of the nozzle on the left, and also surrounds the throat 20. The plenum is fed by the compressed gas inlet 3, and has three primary exits. The first exit is adjacent to the liquid inlet 6. The second and third exits are at the first compressed gas ring of ports 1 and the second compressed gas ring of ports 2.

As the partially atomized liquid mixes with the ambient air, the throat 20 having a reduced diameter as compared to the diameter of the inlet cone 24, induces a venturi effect and increases the velocity of the air and liquid therein, while decreasing the pressure in the throat 20. This decrease in pressure is what draws in the ambient air through the ambient air inlet 5.

After primary atomization 7, the first compressed gas jet ring 1 comprises a plurality of ports that circumscribe the throat. The first compressed gas jet ring 1 is located within the throat about a distance of 0.1D to about 10D from the throat opening 23 wherein D is the Diameter 25 of the throat 20. The ports of the jet ring are evenly spaced along the circumference and provide for access and entry ports between the plenum 4 and the throat. The compressed gas, as it is blown into the throat 20, therefore mixes with the primary atomized liquid, ambient air, and compressed gas at a secondary atomization, mixing, and dilution point 8.

A second compressed gas jet ring 2 is located a distance of 0.1D to 10D from the first compressed gas jet ring 1. This second compressed gas jet ring 2, enhances turbulence in the throat and continues to mix with the droplet mixture from point 8 to form a tertiary mixing and dilution point 9. The throat maintains the same diameter through the distance from the throat opening 23 through to the throat outlet 21. Therefore, after the second compressed gas jet ring 2 forms the tertiary mixing and dilution point 9, at the throat outlet 21. The throat outlet is 0.1D to 10D from the second compressed gas jet ring 2. Passing through the throat outlet 21, the mixture enters the diffuser and the expansion zone 10, which has a greater diameter than the throat and the mixture thus slows down slightly, the pressure increases, and the mixture exits the nozzle at the end of the outlet cone 22.

The result of the atomization and mixture with the stages of compressed gas and ambient air, is that the liquid particles are rapidly reduced in size by evaporation from the air and low pressure and results in solid or liquid nanoparticles that are dispersed by the flow of gasses through the nozzle.

The throat of the multi-stage nozzle in FIG. 1 is elongated to enable higher flow rates for a given backpressure and compressed air usage which results in more efficient nanoparticle formation. The elongated throat 20 provides for introduction of compressed air at several different points along the throat 20. In a preferred embodiment, two or more jet rings are located in the throat 20 that introduce compressed air into the nozzle. The elongated throat 20 comprises three or more lengths, wherein the number of lengths is always one more than the number of jet rings in the throat. A first length 30 is the distance between the throat opening 23 and the first jet ring 1. The second length is the jet distance 31 between the first jet ring 1 and the second jet ring 2. The third length is the diffuser distance 32 between the second jet ring 2 and the throat exit 21. The overall length of the throat is an approximate length of XD, wherein X is between 0.1 and 50 and D is the diameter of the throat at the inlet side of the throat. The optimal length of the throat may depend upon additional factors, such as the intended use of the nozzle.

The jet distance 31 is the distance between the first and second set of jet rings. The distance between the jet rings is preferably between about 0.1D and 10D, but the distance can be modified based on the intended use of the nozzle. Indeed, by increasing or decreasing the distance between the jet rings, the end user can modify and tailor the resultant size of the nanoparticles and the total flow through the nozzle.

The cylindrical housing or throat portion of the nozzle may also include texture or surface roughness within the throat between the two jet rings, for example along the throat section 31. This roughness can be achieved by any suitable means but preferably by interrupting the surface with axially spaced serrations. This surface texture or roughness can assist with modifying performance at particular backpressures for certain embodiments. However, the surface may also be generally smooth to the touch, such as the surface as is generated through plastic molding, or from manufacture of the nozzle in a die-cast or other metallic manufacturing process.

The aerosol nanoparticles produced and distributed by the apparatus of FIG. 1 can be used for a variety of purposes, including various coatings and environmental remediation. For example, liquid aerosol nanoparticles may be sprayed into contaminated air or on contaminated soil to remove pollutants.

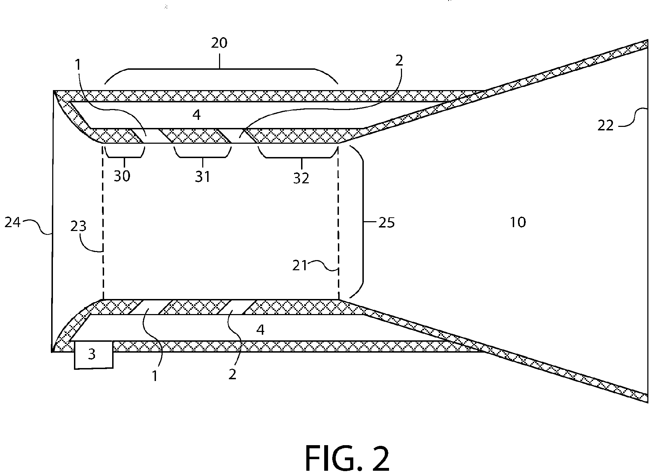

The apparatus can also serve as a gas flow generating device as depicted in FIG. 2 with numerous further potential applications such as venting containers. The various uses of the apparatus of the present invention can be combined to advantageously achieve industrial, commercial, and recreational functions. Such functions include environmental remediation and the venting of storage tanks.

The apparatus of FIG. 1 can be advantageously manufactured or milled as a single piece component, wherein the nozzle portion is connected to the gas flow amplifying portion by way of the plenum 4. Furthermore, the ambient air inlets 5 as connected to the inlet cone 24 may be connected at one or more points. Alternatively, the apparatus can be manufactured as a first nozzle portion and a second gas flow amplifying portion that can be combined for fluid communication between the nozzle and the inlet cone 24 by means known to one of ordinary skill in the art.

FIG. 2 depicts a modified gas flow amplifier for generating a gas flow. The left side of FIG. 2 depicts the inlet cone 24. Like an ordinary venturi system, the inlet cone 24 gathers a flow and is conical in shape to compress the flow into the throat 20 of reduced diameter. The throat entrance 23 has a diameter 25 of D that is narrower than the diameter at the entrance of the inlet cone 24. A compressed gas plenum 4 circumscribes the venturi, such that the compressed gas is forced into the throat 20 at a first compressed gas jet ring 1 and a second compressed gas jet ring 2. The utilization of two or more compressed gas jet rings enables more efficient usage of compressed gas for a given backpressure and total flow through the device. At the throat end 21, the diameter again expands until the outlet cone exit 22.

The plenum 4 is fed by a compressed gas inlet 3. This allows for a single point on the Venturi device to feed all of the ports on each of the first and second set of jets. Indeed, in each jet ring, there are a plurality of ports. In preferred embodiments, the ports are evenly spaced along the circumference of the throat 20.

Like the apparatus of FIG. 1, the components in the venturi or gas flow amplifier are separated by distances between the jets and the openings on each end of the throat. The distances between the first ring of jets 1 and the second ring of jets 2 and also the distances between the jet rings and the throat entrance 23 and the throat exit 21 make up the throat length. A first distance between the throat entrance 23 and the first ring of jets 1 is the primary distance 30. The distance 31 is the distance between the first and second jet rings. This jet distance 31, spaces the two jet rings within the throat 20. The diffuser distance 32 is the distance between the second jet ring 2 and the throat exit 21. Each of the distances 30, 31, and 32 have a length of about 0.1D to about 10D, wherein D is the diameter 25 of the throat or cylindrical housing. In preferred embodiments, the distances are between about 0.1 and 4.0D, or about 0.5D to about 4.0D, or about 0.5D to about 2.0D. The distances do not need to be equal. Thus the first distance 30 does not need to be equivalent to the second distance 31 which does not need to be equivalent to the third distance 32. Indeed, modification of these distances changes the relative pressure and flow of the venturi as is depicted in subsequent figures.

In preferred embodiments, the design of the Venturi or gas flow amplifier and the introduction of two or more rings of high velocity jets (or similar devices) allows for a higher total flow through the apparatus upon reaching the outlet side beyond that of a standard Venturi for a given backpressure and compressed air flow rate.

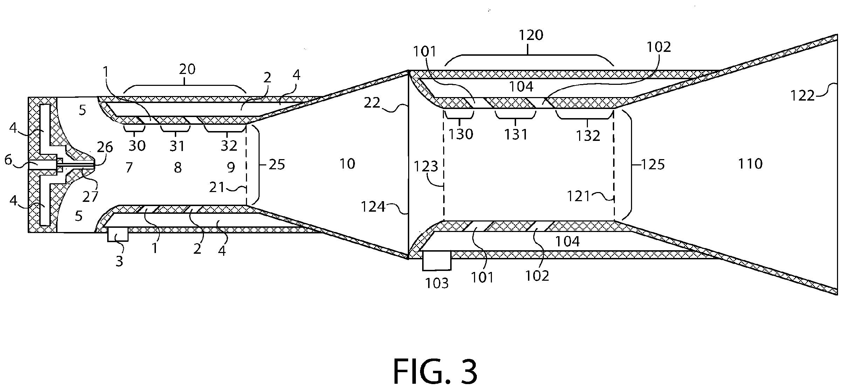

FIG. 3 provides an application of the multi-stage nozzle of FIG.1 in series with the modified Venturi of FIG. 2. Accordingly, a liquid enters through the liquid inlet 6, passes through the throat 20 and out of the outlet cone 22. The flow then passes into the inlet cone 124, and into the second venturi 123, where the flow is narrowed by the venturi. The jets 101 and 102 continue the mixing of the flow before the flow exits the second venturi. As depicted, the diameter 25 is smaller than diameter 125. However, in other embodiments the diameters may be equivalent, or the first diameter larger than the second diameter. Furthermore, a length of ducting or a container may be placed between the outlet cone 22 inlet cone 124.

Therefore, an appropriate system utilizes a combination of apparatus. A first apparatus comprising a nozzle for generating particles of a bulk liquid and a first gas flow amplifier. However, the system further optionally includes a second gas flow amplifier, such that the particles generated by the nozzle and the first gas flow amplifier can be further impacted by the second gas flow amplifier.

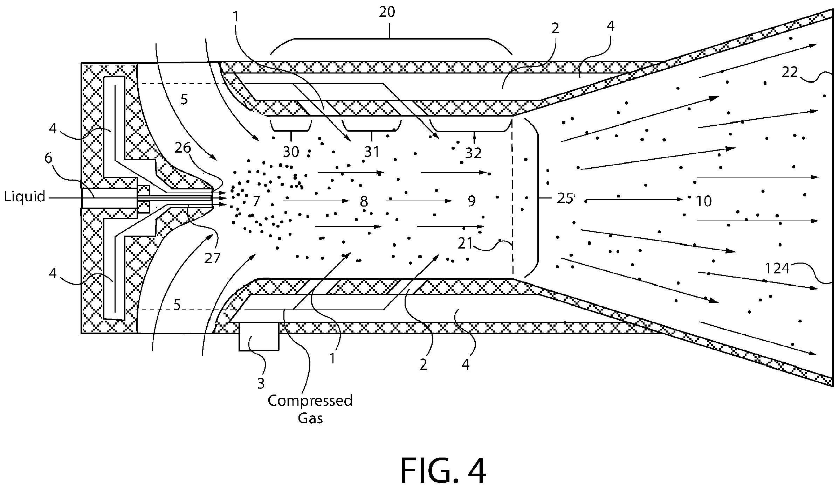

FIG. 4 provides an example of the flow-dynamics through a multistage nozzle of the embodiments disclosed herein. Compressed air enters the nozzle through 3 and flows through plenum 4 to vent 26, jet ring 1, and jet ring 2. Liquid entering the nozzle through inlet 6 is contacted by compressed air at vent 26 providing primary atomization 7. Ambient air enters through inlet 5 and mixes with compressed air through jet ring 1 and atomized liquid mixture 7 in the throat region 8. Compressed air entering through jet ring 2 further mixes with the flow mixture from throat region 8 in throat region 9 before exiting the throat and entering the outlet cone 22 and exiting the device.

The compressed gasses suitable for introduction into the apparatus include, but are not limited to ambient air, nitrogen, helium, argon, CO2, and combinations thereof. The gas, or combination of gasses is introduced into the throat portion 20 of the apparatus using two or more locations along the longitudinal axis of the throat 20. The ports suitable for gas injection at each location can utilize a single nozzle, a ring of nozzles to form compressed gas jets, or nondescript openings at each location. A ring of jets is preferable, so as to provide input of the compressed gas along the circumference of the throat of the venturi, wherein the ring comprises equidistant openings for the expulsion of compressed air. Preferably these openings are ports or nozzles to direct the flow of air, and wherein each ring comprises between about 3 and 100 ports, but more preferably between about 5 and 50 ports, and between about 7 and 15 ports, and including all numbers of ports between 1 and 100. Therefore, a single port may be a complete opening circumnavigating the throat. Alternatively, a single port may be a single hole providing for air to the throat along only a portion of the circumference.

In some embodiments, the two or more gas injection ports may include a first injection port using compressed gas and a further injection port utilizing naturally aspirated gas that is pulled into the opening in the venturi. In further preferred embodiments, the two or more gas injection ports may be compressed gas, or one compressed gas and the remaining ambient.

Therefore, use of the nozzle and gas flow amplifier can be utilized in certain methods to generate nanoparticles by administering a bulk liquid into the nozzle and applying a compressed gas through the ports in the throat of the apparatus so as to atomize

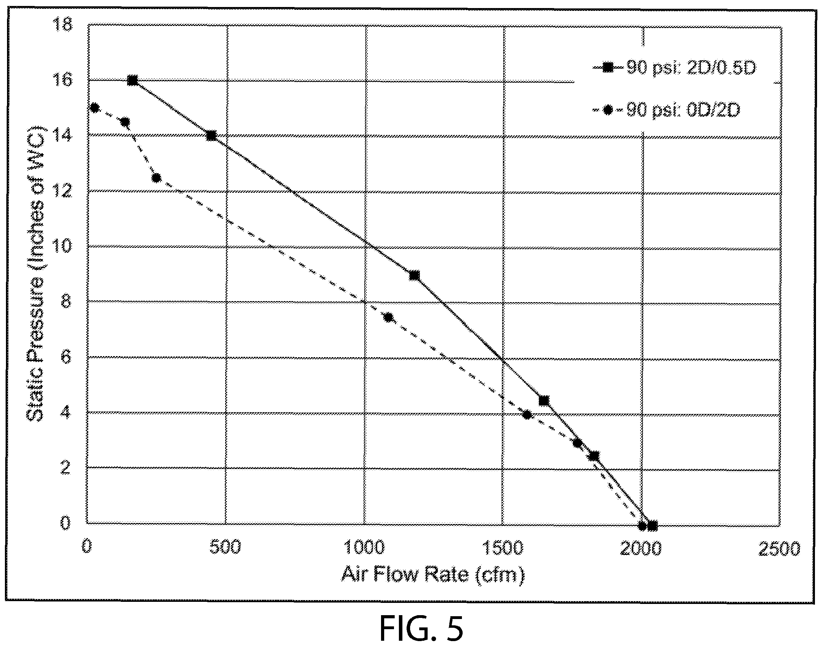

Certain tests were performed to compare the efficiency of the two jet ring apparatus in FIGS. 1 and 2 as compared to a single jet ring/standard venturi. In FIG. 5, two different nozzles were tested and the results calculated. The notation in the legend, XX D/XX D refers to the length of the throat between the two rings and the length of the throat between the second ring and the diffuser, respectively. 0D/2D means only one ring and 2D between that ring and the start of the diffuser. 2D/0.5D means two throat diameters between the two rings and 0.5 throat diameters between the second ring and the start of the diffuser.

FIG. 5 thus compares a single ring, standard venturi to a multi-ring apparatus as described herein having two rings of jets within an elongated throat. FIG. 5 therefore confirms that splitting the compressed air into two or more stages for constant throat diameter, and compressed air pressure and flow rate that flow is increased, particularly at higher back pressures. This results in higher turbulence, higher dilution, and consequently, more efficient nanoparticle formation. Therefore, the two-jet ring version of the invention described herein is superior to a single-ring venturi device in total air flow for all static pressures.

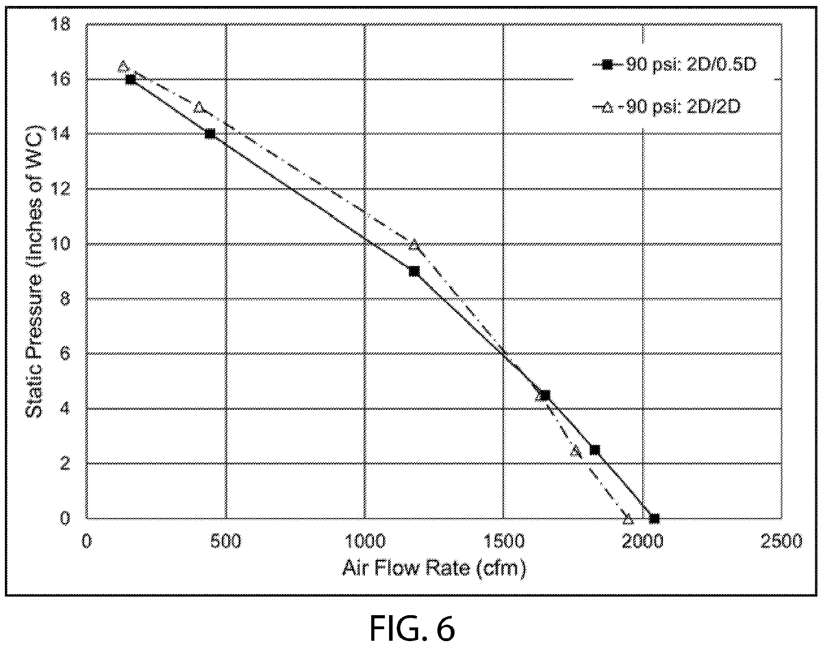

Performance was tested to then identify how to maximize the performance of the new nozzles. FIG. 6 depicts that performance at higher back pressures can be improved by increasing the throat length to the diffuser to 2D as shown in Fig. 6 but performance decreases at lower back pressures. Performance at lower backpressures can be improved by adding surface roughness as in US Patent 4,765,373 to enhance local turbulence and mixing between the two jet rings and between the second jet ring and the diffuser. Accordingly, surface texture or roughness may be added to modify the performance at certain backpressures.

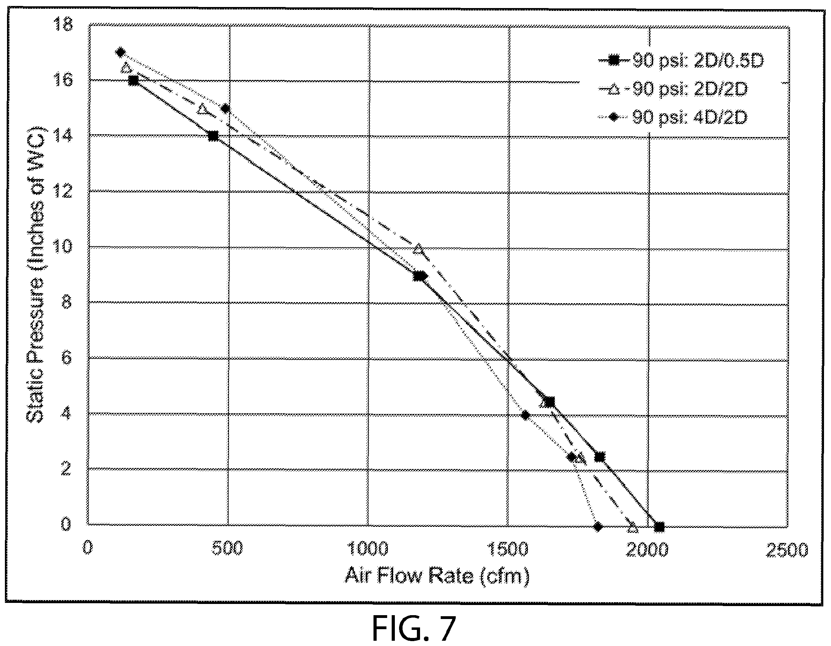

FIG. 7 further depicts that if the length of the throat between the rings is further increased to 4D, flow is somewhat lower overall for a given pressure due to increased pressure drop in the atomizer resulting in decreased efficiency of nanoparticle formation.

While the invention has been particularly shown and described with reference to some embodiments thereof, it will be understood by those skilled in the art that they have been presented by way of example only, and not limitation, and various changes in form and details can be made therein without departing from the spirit and scope of the invention. Thus, the breadth and scope of the present invention should not be limited by any of the above-described exemplary embodiments, but should be defined only in accordance with the following claims and their equivalents.

All documents cited herein, including journal articles or abstracts, published or corresponding U.S. or foreign patent applications, issued or foreign patents, or any other documents, are each entirely incorporated by reference herein, including all data, tables, figures, and text presented in the cited documents.

### METHODS AND MATERIALS

In the examples provided, the diameter of throat used to collect the data for both the single and dual-ring venturis was 3.625 inches. The compressed gas pressure applied to all venturis was 90 pounds per square inch. The compressed air flow rate applied to all venturis was 144 standard cubic feet per minute.

The single-ring venturi used to provide example data represented an existing standard venturi design such as in US Patent 4,765,373.

The dual-ring venturi used to provide example data is described by FIG. 2 with varying lengths between the two rings and between the second ring and the diffuser.

### RESULTS

Based on the results, a, preferred configuration is greater than or equal to 0.5D throat length between the rings and between the ring and the diffuser. More preferred is 0.5D to 4D. Even more preferred is 0.5D to 2D.

Surface roughness in the sections of the throat as described in US Patent 4,765,373 between the rings and between the second ring and the diffuser is also preferred to improved turbulence and dilution flow rate for nanoparticle formation at lower back pressures. The three stage configuration results in the most efficient usage of compressed air at a given pressure for nanoparticle formation for a given flow rate of liquid.

### CLAUSES

The claims of the parent application are reproduced below on pages 22 to 25 as clauses. These clauses define preferred embodiments. The applicant reserves the right to pursue protection for the combinations of features set out in these clauses, and/or for any other subject-matter contained in the parent application as filed, either in the present divisional application or in a further application divided from the present divisional application. The claims of the parent application are not the claims of this divisional application.
1. A solid or liquid nanoparticle generation apparatus comprising:
   a nozzle, to create a first particle size from a bulk liquid flow, that is in fluid communication with a gas flow amplifier where a means is provided for fluid communication with ambient gas between the nozzle and the gas flow amplifier;
   the gas flow amplifier comprising:
      an inlet cone connected to and in fluid communication with the inlet of a cylindrical housing; a diffuser connected to and in fluid communication with the outlet of said housing; and said housing comprising at least two rings of ports disposed of along a circumference of the cylindrical housing; and a means to inject compressed gas into the housing through said ports.
2. The apparatus of clause 1 where the nozzle is a bifluid, electrostatic, pressure spray, or ultrasonic nozzle.
3. The apparatus of clause 1 where the nozzle is a siphon or gravity fed bifluid nozzle.
4. The apparatus of clause 1 where the distance between the outlet of the housing and the nearest ring of ports and between the at least two rings of ports is at least 0.5D where D is the throat diameter of the cylindrical housing.
5. The apparatus of clause 4 where the distance is 0.5D to 2D.
6. The apparatus of clause 4 where the distance is 0.5D to 4D.
7. The apparatus of clause 1 where the interior walls of the cylindrical housing, between the exit of the housing and the nearest ring of ports and, between the at least two rings of ports, comprise a roughened wall segment.
8. The apparatus of clause 1 where the distance between the outlet of the nozzle and the inlet of the cylindrical housing is equal to or less than 0.5D/TAN(Theta/2) where D is the throat diameter of the cylindrical housing and Theta is the spreading angle of the spray emitted from the nozzle.
9. The apparatus of clause 1 further comprising a second gas flow amplifier comprising:
   an inlet cone connected to and in fluid communication with the inlet of a cylindrical housing; a diffuser connected to and in fluid communication with the outlet of said housing; wherein said housing comprises at least two rings of ports to inject compressed gas into the housing in such a way as to induce flow into the inlet of the housing; and a means for connecting a compressed gas supply to the housing; wherein the inlet cone of the second gas flow amplifier is in fluid communication with the diffuser of the first gas flow amplifier.
10. A gas flow amplifier comprising:
   an inlet cone connected to and in fluid communication with the inlet of a cylindrical housing;
   a diffuser connected to and in fluid communication with the outlet of said housing; wherein said housing comprising at least two rings of ports to inject compressed gas into the housing in such a way as to induce flow into the inlet of the housing; and
   a means for connecting a compressed gas supply to the housing.
11. The gas flow amplifier of clause 10 where the distance between the exit of the housing and the nearest ring of ports and between the at least two rings of ports is at least 0.5D, where D is the throat diameter of the cylindrical housing.
12. The gas flow amplifier of clause 11 where the distance is 0.5D to 4D.
13. The gas flow amplifier of clause 10 where the interior walls of the cylindrical housing, between the exit of the housing and the nearest ring of ports, and, between the at least two rings of ports, comprise a roughened wall segment.
14. The gas flow amplifier of clause 10 wherein the means for connecting a compressed gas supply to the housing is provided by a plenum connected to the at least two rings of ports.
15. A nanoparticle generation system comprising:
   a. a first nozzle, suitable for generating atomized particles of a bulk liquid;
   b. a gas flow amplifier, comprising a cylindrical housing having disposed on one end a conical inlet and on the other end a conical diffuser; and disposed of within said cylindrical housing is at least two rings of ports arranged in circular fashion along the circumference of the cylindrical housing and wherein the at least two rings of ports are separated by a distance of at least 0.5D, and wherein the at least two rings of ports are connected to a pressurized plenum, sufficient for expelling pressurized gas into the cylindrical housing; and
   c. wherein the first nozzle is in fluid communication with the inlet of the cylindrical housing and wherein a liquid is suitably ejected from the first nozzle and into the cylindrical housing in such a way as to atomize, mix, dilute, and evaporate the liquid so as to create and maintain a solid or liquid nanoparticle aerosol.
16. The nanoparticle generation system of clause 15, where the bulk liquid has a surface tension between 15 dynes/cm and 80 dynes/cm.
17. The nanoparticle generation system of clause 15 where the bulk liquid contains a solute dissolved in the bulk liquid.
18. The nanoparticle generation system of clause 15 where the distance between the exit of the housing and the nearest ring of ports and between the at least two rings of ports is at between 0.5D and 4.0D, where D is the throat diameter of the cylindrical housing.
19. The nanoparticle generation system of clause 15 where the wall segments between the exit of the housing and the nearest ring of ports and between the at least two rings of ports comprises a roughened wall segment.
20. The system of clause 15 further comprising a second gas flow amplifier wherein the end of the first conical diffuser is in fluid communication with a conical inlet of the second gas flow amplifier.

## Claims

1. A nanoparticle generation system comprising:
a nozzle in fluid communication with a conical inlet of a first gas flow amplifier such that the nozzle is positioned to eject atomized liquid particles, wherein the first gas flow amplifier comprises a cylindrical housing having disposed on one end the conical inlet and on the other end a conical diffuser; and
at least two rings of ports disposed along circumference of the cylindrical housing that are connected to a pressurized plenum in such a way to direct pressurized gas into the cylindrical housing to further atomize and mix the atomized liquid ejected by the nozzle through the conical inlet and into the cylindrical housing to maintain a solid or liquid nanoparticle aerosol.

2. The nanoparticle generation system of claim 1, wherein the at least two rings of ports are separated by a distance of at least 0.5D, where D is the throat diameter of the cylindrical housing.

3. The nanoparticle generation system of claim 2, wherein the at least two rings of ports is arranged in a circular fashion along the circumference of the cylindrical housing.

4. The nanoparticle generation system of any of claims 1 to 3, wherein the nozzle comprises a liquid inlet and a liquid vent.

5. The nanoparticle generation system of claim 4, wherein the liquid inlet is in fluid communication with a bulk liquid.

6. The nanoparticle generation system of either of claims 4 or 5, wherein the liquid vent ejects the atomized liquid particles and is positioned at a distance of 0.5D/TAN(THETA/2) from the conical inlet, where D is the throat diameter of the cylindrical housing and THETA is the spreading angle of the atomized liquid jet generated from the liquid vent.

7. The nanoparticle generation system of any of claims 1 to 6, wherein the ejected atomized liquid particles are micron-sized droplets.

8. The nanoparticle generation system of any of claims 1 to 7, wherein the cylindrical housing comprises texture or surface roughness between the at least two rings of jets.

9. The nanoparticle generation system of any of claims 2 to 8, wherein the distance between the at least two rings of ports is between 0.5D to 4.0D, where D is the throat diameter of the cylindrical housing.

10. The nanoparticle generation system of any of claims 1 to 9, wherein the cylindrical housing has an elliptical shape.

11. The nanoparticle generation system of any of claims 1 to 10, wherein the conical inlet has angled corners.

12. The nanoparticle generation system of any of claims 1 to 11, wherein the conical diffuser has angled corners.

13. The nanoparticle generation system of any of claims 5 to 12, wherein the bulk liquid has a surface tension from 15 dynes/cm to 80 dynes/cm.

14. The nanoparticle generation system of any of claims 1 to 13, further comprising a second gas flow amplifier positioned such that the particles generated from the first gas flow amplifier can be further atomized.

15. The nanoparticle generation system of any of claims 1 to 14, wherein ambient air is pulled into the nozzle through an ambient air inlet.
